# EUROPEAN PATENT SPECIFICATION

(11) **EP 0 787 090 B1**
(45) Date of publication and mention of the grant of the patent: **05.12.2001**
(21) Application number: 96929612.8
(22) Date of filing: 20.08.1996
(51) Int. Cl.: B62D 33/10

(54) **ARRANGEMENT FOR RESILIENT SUSPENSION OF A CAB WITH RESPECT TO A VEHICLE FRAME**
ANORDNUNG FÜR EINE ELASTISCHE AUFHÄNGUNG ZWISCHEN FAHRERHAUS UND FAHRZEUGRAHMEN
SYSTEME DE SUSPENSION ELASTIQUE D'UNE CABINE SUR LE CHASSIS D'UN VEHICULE

(30) Priority: 29.08.1995 SE 9502971
(43) Date of publication of application: 06.08.1997
(73) Proprietor: Scania CV AKTIEBOLAG, 151 87 Södertälje (SE)
(72) Inventor: GRÖNLUND, Mats, SE-141 41 Huddinge (SE)
(86) International application number: SE9601025
(87) International publication number: WO9708038

(56) References cited:
- EP-A- 0 429 084
- WO-A-93/19973
- DE-A- 2 148 126
- PATENT ABSTRACTS OF JAPAN, Vol. 11, No. 76, M-569; & JP,A,61 232 968 (NISSAN MOTOR CO. LTD.), 17 October 1986.

## Description

The invention relates to an arrangement for resilient suspension of a cab with respect to a vehicle frame according to the preamble of patent claim 1, and a bushing, which forms part of the arrangement, according to the preamble of patent claim 8.

### State of the art.

The suspension of flexibly mounted cabs with respect to the frames of heavy-duty vehicles such as trucks at present involves inter alia a number of spring struts each incorporating a spring and a shock absorber. Each spring strut is often provided, at its upper fastening, with bushings in the form of rubber rings in order to damp vibrations.

These rubber rings have to be sufficiently rigid to cope with being loaded by the cab. This involves either the rubber rings or the shock absorbers being able to filter out objectionable effects within a frequency range of approximately 80-300 Hz depending on hysteresis and internal friction. However, this frequency range often includes disturbing vibrations from the frame, often with amplitudes of less than 2-3 mm, which may thus be propagated to the cab.

Further the rubber rings have to be simple and reliable and mainly be subjected to compressive load, thereby minimising the risk of the bushing failing by shearing.

The subject - matter of the preamble of claim 1 is known from the documents SE 94 02 296 and WO 93 19973 -A SE 94 02 296 refers to a forward cab suspension fastening which is otherwise advantageous but which incorporates a heavy cast bracket for fastening the shock absorber to the cab, which makes disturbing low-amplitude noise even more critical.

WO 9319973-A refers to a bushing which is designed to reduce the propagation of vibrations, but the bushing does in fact merely cause a rigidity which increases gradually with increasing load.

The subject - matter of the preamble of claim 8 is known from the documents SU 14 81 130, JP,A, 61 232 968, EP 0429084 - A1 and DE 2148126-8.

SU 14 81 130 JP.A.61-232968 and EP 0429084-A1 refers to bushings which are designed to reduce the propagation of vibrations, but each bushing also constitutes a spring device (there is no spring strut) and does in fact merely cause a rigidity which increases gradually with increasing load.

DE 2148126 - A refers to a rubber bushing subjected both to compressive load and to horizontal load, which increase the risk of the bushing failing by shearing.

A multiplicity of different arrangements for fastenings of spring strut designs with spring and shock absorber are known from vehicle wheel suspensions in which rubber bushings have greater rigidity at larger amplitudes in order to cope with power loads and less rigidity at small amplitudes for vibration damping. Such solutions are referred to, for example, in SE 159 273 and WO 89 05 242.

However, quite different load situations apply to the cab suspension of a heavy vehicle. There are several excitation sources, since the frame is a large mass which is acted upon by vibrations not only from the drive unit, trailers and superstructures but also from the wheels. It is therefore not possible to transfer solutions directly from the wheel suspension of passenger cars to the cab suspension of heavy-duty vehicles.

### Objects of the invention.

The invention has the object of providing a heavy-duty highway vehicle such as a truck with an improved flexible cab suspension, preferably a forward suspension of the type referred to in SE 94 02 296, whereby special and ordinarily occurring low-amplitude vibrations from the vehicle chassis in the frequency range of approximately a few hundred hertz can be filtered out and hence essentially not reach the cab, irrespective of whether the vibration causes the cab to move away from or towards the frame.

A further object is to provide a simple and reliable rubber bushing which can be used in a cab suspension whereby all major loads on the fastening of the spring strut in the cab via the bushing cause the latter to "bottom" and be mainly subjected to compressive load, thereby minimising the risk of the bushing failing by shearing. To this end, the bushing should be made very weak with respect to low-amplitude vibrations in the aforesaid frequency range so that these vibrations can be filtered out effectively and not reach the cab.

Another object is to make it easy to fit a spring strut to the cab which, as a composite unit including a spring fixed in the spring strut and a shock absorber, can be fitted firmly with respect to a purpose-made fitting recess in the lower portion of the cab.

### Brief description of the invention.

The arrangement for cab suspension according to the invention is distinguished by what is indicated in the characterising part of patent claim 1, and the bushing which forms part of the arrangement by what is indicated in the characterising part of patent claim 8.

Other features and advantages which distinguish the invention are indicated by the characterising parts of other patent claims and by the following description of an embodiment. The description refers to the attached drawings.

List of drawings.
Figure 1 shows a side view of a spring strut.
Figure 2 shows the force in the rubber bushing as a function of the deflection movement S.
Figure 3 shows an unfitted rubber bushing which is not prestressed by the dead weight of the cab.
Figure 4 shows schematically a vehicle cab suspended with respect to the frame by means of four spring struts.

### Description of an embodiment.

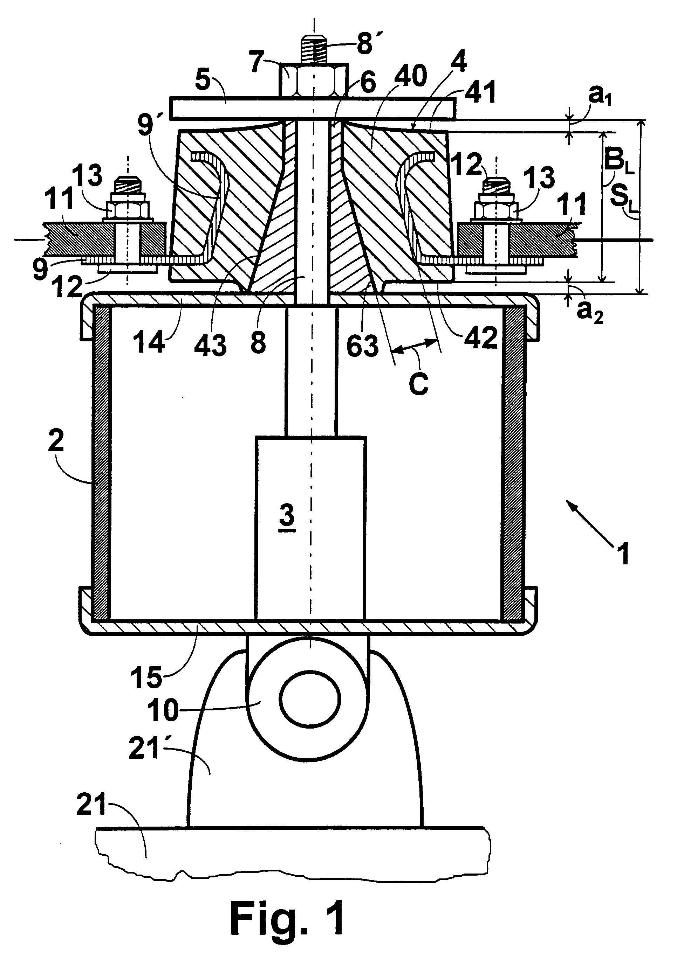

Figure 1 shows a spring strut 1 incorporating a shock absorber 3 and a spring 2 which is arranged parallel with the shock absorber. In this case the spring 2 is an air bellows which is arranged concentrically with the shock absorber and which can in a conventional manner (not shown) be filled with and emptied of compressed air in order to adjust the level of the cab. The shock absorber is arranged within the air bellows and is clamped between upper and lower end covers 14,15. The fact that the shock absorber is internally clamped between the end covers of the air bellows without movable penetrations makes it easy to seal the air bellows. The air bellows 2 may be replaced by another type of spring such as a coil spring. The spring 2 and the shock absorber 3 are arranged as a composite unit between the end covers 14,15. This makes it easy to fit the spring strut with respect to the cab and the frame.

A fastening eye 10 is arranged on the lower end cover 15 and can be flexibly anchored to an element fastened to the frame, advantageously a corresponding fastening eye 21' or a pin firmly arranged on the frame 21. It may be advantageous to use an alternative arrangement according to SE 92 03 909.

In the upper part of the spring strut there is a rubber bushing 4 according to the invention incorporating a sleeve-shaped rubber element 40 and an internal rigid supporting sleeve 6 arranged on an at least partly threaded rod-shaped device 8 which protrudes upwards from the upper portion of the spring strut, preferably an axial extension of the piston stem of the shock absorber 3, which only requires a static seal at the penetration through the end cover 14. The supporting sleeve 6 is anchored to the upper end cover 14 of the spring strut by means of a nut 7 which is applied to the rod-shaped device 8 and which presses a stop surface 5, here a loose washer, against the upper portion of the supporting sleeve 6. The supporting sleeve 6 of the rubber bushing is thus clamped firmly between two stop surfaces, namely the washer 5 and the upper end cover 14 of the spring strut.

The bushing 4 is connected to the cab via a bracket 11 which is fastened to the cab. A fastening element 9 is cast in, along its radial inner portion 9', into the rubber element. The radially outer portion of the fastening element 9 protrudes clear of the rubber element 40 and is provided with holes 16 through which anchoring bolts 12 are arranged. The anchoring bolts may alternatively be welded firmly to the fastening element 9. If the spring strut is pushed upwards, the anchoring bolts 12 can be inserted in the corresponding fitting holes in the cab bracket 11, followed by applying a locknut 13 to secure the bushing to the cab.

The fastening element 9 is provided, along its radially inner portion 9', with a collar which is developed upwards in the longitudinal direction of the spring strut and which has a radially inward surface substantially concentric with, and with the same top angle as, the outer surface 63 of the supporting sleeve, whereby the inner collar portion of the cab bracket is totally enclosed in the rubber bushing and is arranged at a substantially constant distance C in the circumferential direction from the outer surface 63 of the supporting sleeve.

For the sake of favourable loading of the rubber element 40, not only the supporting sleeve 6 but also the rubber element 40 and the inward-facing surface 9' of the collar are concentric and conical, with an outside diameter decreasing upwards. This results in both compressive and shear loading of the rubber element 40, which is advantageously firmly vulcanised along its radially inner surface 43 to the radially outer surface 63 of the supporting sleeve. The axial length of the rubber element at its connection to the supporting sleeve 6 may correspond to the length of the latter, in which case the upper and lower ends of the rubber element are of very limited radial extent beyond a short axial length, a fact which does not substantially affect the characteristics of the rubber bushing. The local axial length increase alongside the whole contact surface with the supporting sleeve 6 is designed to reduce the load in the jointing inner surface 43 and outer surface 63.

The rubber portions radially outwards about the collar 9' have no springing or damping function and can therefore theoretically be excluded, but from the manufacturing and strength points of view it is advantageous to cast the whole collar into the rubber element. The collar may also be replaced by a solid fastening element with the same height as the collar, but the result would probably be an expensive and heavy structure.

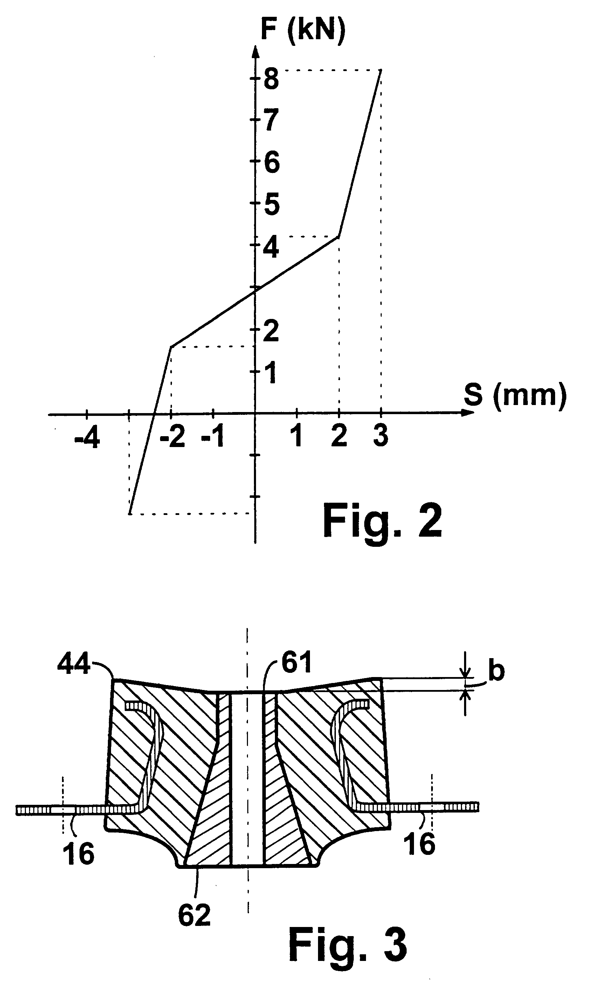

Figure 3 shows the bushing 4 as initially manufactured before being fitted to the spring strut and before the stop surfaces 5,14 at the respective ends of the supporting sleeve can limit the movement of the rubber bushing. In this state the rubber bushing is not loaded by the dead weight of the cab, which means that the upper outer periphery 44 of the rubber element will be at the distance b above a plane which is tangential to the upper end surface 61 of the supporting sleeve.

After the cab has been mounted on the frame, the rubber bushing 4 is loaded by the weight of the cab so that the upper outer periphery 44 of the rubber element will be in a plane which is at the distance a₁ below a plane which is tangential to the upper end surface 61 of the supporting sleeve, as shown in Figure 1. The supporting sleeve 6 has an axial length S_{L} and the rubber element 40 has an axial length B_{L} beyond the main part of the radial extent of the rubber bushing, i.e. from a short distance from the supporting sleeve to the outer periphery of the rubber bushing. The length S_{L} of the supporting sleeve exceeds the length B_{L} of the rubber bushing so that there is a clear distance a₁ between the washer 5 and the axially directed upper surface 41 of the rubber bushing. It is advantageous that the rubber bushing be dimensioned so that the clear distance a₁ during static loading by the cab corresponds to S_{L}-B_{L}/2, thereby also creating a clear distance a₂ between the upper end cover 14 and the axially directed lower surface 42 of the rubber bushing. If the rubber bushing is dimensioned as above, then a₂ = S_{L}-B_{L}/2 = a₁ when the cab is mounted on the spring struts and statically loads the bushings.

The stop surfaces 5,14 have an outside diameter which corresponds to or slightly exceeds that of the rubber element. This results in the axially directed surfaces 41,42 of the rubber element abutting fully against the stop surfaces when the bushing "bottoms", i.e. when the spring strut is subjected to vibrations with larger amplitudes than a₁ and a₂ respectively.

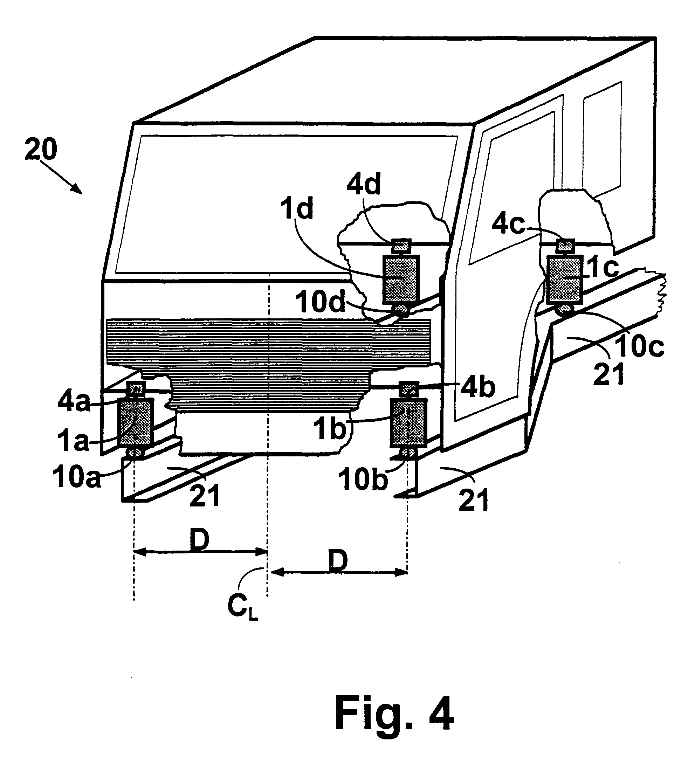

Figure 4 is a schematic depiction of a cab which is flexibly suspended on four spring struts 1a1d with respect to the vehicle frame 21. Each spring strut is in principle arranged vertically and placed in the vicinity of a corner of the cab in such a way that each spring strut absorbs a similar load. The four spring struts 1a-1d are arranged in pairs at the forward and rear edges respectively of the cab and in such a way that each spring strut in the respective pairs is arranged at substantially the same distance D from the vehicle centreline C_{L} and that each spring strut in the static state does in principle absorb about 25% of the service weight of the cab 20. Each of the spring struts 1a-1d, including their bushings 4a-4d, has to be adapted to the service weight of the cab so that there is prestressing of the rubber bushing and that there are in principle equal distances a₁, a₂ between the stop surfaces 5,14 and the axially directed surfaces of the rubber bushing.

The rubber bushing is dimensioned so as to achieve a spring characteristic according to Figure 2, in which the load F is depicted as a function of the deflection movement S. In the neutral position S=0 the rubber bushing is prestressed by a static load which depends on the weight of the cab and which in this case with four evenly loaded spring struts may correspond to 25% of a normal cab weight of about 1200 kg, corresponding in the diagram to 290 kg or a load of 2900 N. This static prestressing by the weight of the cab and the clear distances a₁, a₂ of 2 mm each between the stop surfaces 5,14 and the axial surfaces 41,42 of the bushing result in a weak bushing at vibration amplitudes of up to 2 mm from a static equilibrium position. At vibration amplitudes exceeding 2 mm, the end surfaces of the rubber element "bottom" against the stop surfaces 5,14, which means that the bushing is only subjected to compressive forces and therefore becomes significantly more rigid. The rubber bushing is dimensioned so that the spring constant in the amplitude range of -2 to +2 mm from the equilibrium position is within the range 600-800 N/mm and at greater amplitudes (after the rubber element has "bottomed") it is about 4000 N/mm. For certain vehicles, spring constants of about 3000 N/mm have proved advantageous. The ratio between the spring constants should be at least 1/4.

At greater amplitudes the cab may continue to move relative to the frame. After the bushing 4 has "bottomed", the movement is essentially absorbed by the shock absorber 3 (assuming that the frequency is low enough for the shock absorber to keep up with). This happens, for example, when the vehicle is driven through a pothole or crosses any similar unevenness of the carriageway. It is advantageous that the rubber bushing be dimensioned with respect to a calculated cab service weight, which includes normal equipment in the cab and a driver. With clear distances a₁, a₂ of 2 mm in the static equilibrium position, the bushing "bottoms" at a load of 1300 N (130 kg) per spring strut. If the clear distances a₁, a₂ are increased to 3 mm each, "bottoming" only takes place at a load of 2000 N per spring strut.

Suitable dimensioning of the bushing and adaptation of the clear distances a₁,a₂ provide a good safety margin against "bottoming" of the bushing due to static load under normal cab weight load. In the case of a higher cab service weight due, for example, to extra equipment such as coolers etc., it is easy to adapt the bushing to the higher service weight by fitting a spacing washer between the upper end cover 14 and the lower surface 62 of the supporting sleeve, provided that the outside diameter of the spacing washer corresponds to the outside diameter of this lower surface 62 of the supporting sleeve. If it is at the same time desired that the bushing should maintain a similar characteristic even when the cab moves away from the upper portion of the spring strut, the washer 5 may be replaced by a washer which is provided with an increased thickness radially outwardly about the contact surface of the washer with the upper surface 61 of the supporting sleeve. The spacing washer and the modified washer 5 are dimensioned so that the distances a₁ and a₂ are within the range 2-3 mm, and are preferably equal, when the only static load on the bushing is the cab service weight.

The embodiment described may be modified in a multiplicity of ways within the scope of the patent claims. What is essential is that the rubber bushing is capable of filtering out vibrations within the amplitude range 2-3 mm, which means that the clear distances a₁ and a₂ have to be within a corresponding range, advantageously 2.5 mm each. At the same time, the spring constant of the rubber bushing has to be adapted to any normally occurring weight increase in the cab, which weight increase must not cause the rubber bushing to "bottom" umder the static load arising from such increased weight.

The inner surface 9' the inner surface 43 and the outer surface 63 may also be cylindrical, but this is not preferable, since the bushing would then be weaker from the purely strength point of view and would risk being sheared off.

The outer periphery of the fastening element may also be adapted to the number of bracket elements 12,13 so that the outer periphery may for example be given a triangular shape if three bracket elements 12,13 are used and are arranged at the corners of the fastening element. However, the portions of the fastening element which are enclosed in the rubber bushing and are situated radially inside would have to be given a circular shape to achieve favourable loading of the rubber bushing 4.

## Claims

1. Arrangement for resilient suspension of a cab (20) to a vehicle frame (21) whereby the cab (20) is connected to the vehicle frame (21) via a multiplicity of spring struts (1a-1d) which are in principle arranged vertically, whereby the lower portion (10a-10d) of each spring strut (1a-1d) is connected to the vehicle frame, (21) the upper portion (4a-4d) of each spring strut (1a-1d) is connected to the cab (20) and each spring strut (1a-1d) incorporates a spring (2) and a shock absorber (3) connected in parallel with the spring (2), and each spring strut (1a-1d) is connected via a bushing (4) to an element (11) which is fastened to the cab (20), ***characterised in* that** the bushing (4) incorporates a rubber element (40) arranged externally about and firmly connected to a supporting sleeve (6) which itself is firmly arranged with respect to the spring strut, (1a-1d) which supporting sleeve (6) is provided with an outer surface (63) directed radially outwards against which the rubber element (40) is fixed, a fastening element (9) arranged concentrically externally about the supporting sleeve (6), which fastening element (9) is provided with a radially inner surface (9') substantially concentric with the outer surface (63) belonging to the supporting sleeve (6), whereby the inner surface (9') of the fastening (9) is firmly arranged in the rubber bushing (4) and is situated at a substantially constant distance C from the outer surface (63) of the supporting sleeve (6), which fastening element (9) is provided with anchoring devices (12,13,16) situated radially outside the rubber element (40) for anchoring to the element (11) fastened to the cab (20), that the supporting sleeve (6) has an axial length (S_{L}) and the rubber element (40) has an axial length (B_{L}) along the main part of its radial extent, whereby (S_{L}) is larger than (B_{L}) so that there is a clear distance (a₁) between the axially directed upper surface (41) of the rubber element (40) and a first stop surface (5) which for movement purposes is locked relative to the upper portion (14) of the spring strut (1a-1d) and that there is a clear distance (a₂) between the axially directed lower surface (42) of the rubber element (40) and a second stop surface (14) which for movement purposes is locked relative to the upper portion of the spring strut (1a-1d), when the cab (20) is fitted to the frame (21) and statically loads the bushing (4).

2. Arrangement according to claim 1, ***characterised in* that** the outer surface (63) of the supporting sleeve (6) is conical with diameter decreasing vertically upwards, that the fastening element (9) incorporates a developed conical collar which forms the radially inner surface (9') which is substantially concentric with the outer surface (63) of the supporting sleeve, and that the collar and the inner surface (9') are entirely enclosed in the rubber element (40).

3. Arrangement according to claim 1 or 2, ***characterised in* that** the bushing (4) is dimensioned so that the clear distances (a₁,a₂) are equal and are within the range 2-3 mm when the cab (20) is mounted on the frame (21) and statically loads the bushing (4).

4. Arrangement according to any one of claims 1-3, ***characterised in* that** relative movement between the cab (20) and the vehicle frame (21) with an amplitude exceeding S_{L}-B_{L}/2 in the direction of the spring strut (1a-1d) is absorbed in the bushing (4) so that the axially directed surfaces (41,42) of the rubber element (40) come to abut against the stop surfaces (5,14).

5. Arrangement according to any one of claims 1-4, ***characterised in* that** the rubber bushing (4) is dimensioned so that its spring constant increases by at least five times when the axially directed surfaces (41,42) of the rubber bushing (4) come to abut against the stop surfaces (5,14), i.e. on the occasion of larger relative movements between the cab (20) and the upper portion (14) of the spring strut (1a,1d) than a₁ and a₂ respectively.

6. Arrangement according to any one of claims 1-5, ***characterised in* that** the spring constant of the rubber bushing (4) is of the order of 600-800 N/mm on the occasion of a relative movement of less than a₁ or a₂ respectively between the cab (20) and the upper portion (14) of the spring strut (1a-1d), and that the spring constant of the rubber bushing (4) is about 3000 N/mm on the occasion of a relative movement exceeding a₁ and a₂ respectively between the cab (20) and the upper portion (14) of the spring strut (1a - 1d).

7. Arrangement according to any one of claims 1-6, ***characterised in* that** the spring (2) is an air bellows which surrounds the shock absorber (3), that the air bellows (2) and the shock absorber (3) are clamped between upper and lower end covers (14,15) integrated into the spring strut (1a-1d), and that the element (11) fastened to the cab (20) consists of a solid cast element fixed to the firewall of the cab (20).

8. Bushing (4) intended for supporting a spring strut (1a-1d) of a heavy-duty vehicle with respect to the latter's cab (20), ***characterised by*** a supporting sleeve (6) with an outer surface (63) directed outwards, which outer surface (63) is surrounding and at the same time is firmly connected to a rubber element (40), which rubber element (40) has an axial length which is essentially shorter than the axial length of the supporting sleeve (6), and by a fastening element (9) arranged concentricall externally about the supporting sleeve (6), which fastening element (9) has at its radially inner portion a developed collar with a radially inner surface (9') which is substantially concentric with and at a constant distance C from the outer surface (63), and has at its radially outer portion at least one anchoring device (16), whereby the supporting sleeve (6) is arranged to be secured to the spring strut (1a - 1d) and the anchoring device (16) is arranged to be secured to the cab (20).

9. Bushing (4) according to claim 8, ***characterised in* that** the outer surface (63) of the supporting sleeve (6) is conical with diameter decreasing vertically upwards, that the inner surface (9') is substantially concentric with the outer surface (63) of the supporting sleeve (6), and that the collar and the inner surface (9') are entirely enclosed in the rubber element (40).

10. Bushing (4) according to claim 8 or 9, ***characterised in* that** the supporting sleeve (6) has running axially through it a central hole intended to accommodate a rod-shaped fastening device (8), and that the radially outer portion of the fastening element (9) is disc-shaped with its normal direction substantially parallel with the axial centreline of the aforesaid central hole.

## Patentansprüche

1. Anordnung zur elastischen Aufhängung eines Führerhauses (20) an einem Fahrzeugrahmen (21), wobei das Führerhaus (20) mit dem Fahrzeugrahmen (21) über mehrere Federbeine (1a - 1d) verbunden ist, welche im Prinzip vertikal angeordnet sind, wobei der untere Teil (10a - 10d) jedes Federbeins (1a - 1d) mit dem Fahrzeugrahmen (21) verbunden ist, der obere Teil (4a - 4d) jedes Federbeins (1a - 1d) mit dem Führerhaus (20) verbunden ist und jedes Federbein (1a - 1d) eine Feder (2) und einen mit der Feder (2) parallel verbundenen Stoßdämpfer (3) enthält; und jedes Federbein (1a - 1d) über eine Buchse (4) mit einem Element (11) verbunden ist, das am Führerhaus (20) befestigt ist, ***dadurch gekennzeichnet,* daß** die Buchse (4) ein Gummielement (40) enthält, das außen um eine Traghülse (6) angeordnet und fest mit dieser verbunden ist, die selbst bezüglich des Federbeins (1a - 1d) fest angeordnet und mit einer radial auswärts gerichteten Außenfläche (63) versehen ist, an der das Gummielement (40) befestigt ist, wobei ein außen konzentrisch um die Traghülse (6) angeordnetes Befestigungselement (9) angeordnet ist, das mit einer mit der zur Traghülse (6) gehörenden Außenfläche (63) im wesentlichen konzentrischen radial inneren Fläche (9') versehen ist, wobei die Innenfläche (9') des Befestigungselements (9) in der Gummibuchse (4) fest angeordnet ist und sich in einer im wesentlichen konstanten Distanz C von der Außenfläche (63) der Traghülse (6) befindet, welches Befestigungselement (9) mit radial außerhalb des Gummielements (40) liegenden Verankerungsvorrichtungen (12, 13, 16) zum Verankern mit dem am Führerhaus (20) befestigten Element (11) versehen ist, daß die Traghülse (6) eine axiale Länge (S_{L}) aufweist und das Gummielement (40) eine axiale Länge (B_{L}) entlang dem Hauptteil seiner radialen Ausdehnung aufweist, wobei (S_{L}) größer als (B_{L}) ist, so daß ein Zwischenraum (a₁) zwischen der axial gerichteten Oberseite (41) des Gummielements (40) und einer ersten Anschlagfläche (5) existiert, die zu Bewegungszwecken in Bezug auf den oberen Teil (14) des Federbeins (1a - 1d) verriegelt ist, und es einen Zwischenraum (a₂) zwischen der axial gerichteten Unterseite (42) des Gummielements (40) und einer zweiten Anschlagfläche (14) gibt, welche zu Bewegungszwecken in Bezug auf den oberen Teil des Federbeins (1a - 1d) verriegelt ist, wenn das Führerhaus (20) am Rahmen (21) befestigt ist und die Buchse (4) statisch belastet.

2. Anordnung nach Anspruch 1, ***dadurch gekennzeichnet*, daß** die Außenfläche (63) der Traghülse (6) mit einem vertikal aufwärts abnehmenden Durchmesser konisch ist, das Befestigungselement (9) einen ausgebildeten konischen Kragen aufweist, der die radial innere Fläche (9') bildet, welche mit der Außenfläche (63) der Traghülse im wesentlichen konzentrisch ist, und der Kragen und die Innenfläche (9') im Gummielement (40) vollkommen eingeschlossen sind.

3. Anordnung nach Anspruch 1 oder 2, ***dadurch gekennzeichnet,* daß** die Buchse (4) so bemessen ist, daß die Zwischenräume (a₁, a₂) gleich sind und innerhalb des Bereichs von 2 - 3 mm liegen, wenn das Führerhaus (20) auf dem Rahmen (21) montiert ist und die Buchse (4) statisch belastet.

4. Anordnung nach einem der Ansprüche 1 - 3, ***dadurch gekennzeichnet,* daß** eine Relativbewegung zwischen dem Führerhaus (20) und dem Fahrzeugrahmen (21) mit einer S_{L}-B_{L}/2 übersteigenden Amplitude in Richtung des Federbeins (1a - 1d) in der Buchse (4) so absorbiert wird, daß die axial gerichteten Oberflächen (41, 42) des Gummielements (40) an die Anschlagflächen (5, 14) stoßen.

5. Anordnung nach einem der Ansprüche 1 - 4, ***dadurch gekennzeichnet,* daß** die Gummibuchse (4) so bemessen ist, daß ihre Federkonstante um mindestens das Fünffache zunimmt, wenn die axial gerichteten Oberflächen (41, 42) der Gummibuchse (4) an die Anschlagflächen (5, 14) stoßen, d.h. im Fall größerer Relativbewegungen zwischen dem Führerhaus (20) und dem oberen Teil (14) des Federbeines (1a - 1d) als a₁ bzw. a₂.

6. Anordnung nach einem der Ansprüche 1 - 5, ***dadurch gekennzeichnet,* daß** im Fall einer Relativbewegung zwischen dem Führerhaus (20) und dem oberen Teil (14) des Federbeins (1a - 1d) von weniger als jeweils a₁ oder a₂ die Federkonstante des Gummibuchse (4) von der Größenordnung 600 - 800 N/mm ist und im Fall einer a₁ bzw. a₂ übersteigenden Relativbewegung zwischen dem Führerhaus (20) und dem oberen Teil (14) des Federbeins (1a - 1d) die Federkonstante der Gummibuchse (4) etwa 3000 N/mm beträgt.

7. Anordnung nach einem der Ansprüche 1 - 6, ***dadurch gekennzeichnet,* daß** die Feder (2) ein Luftbalg ist, der den Stoßdämpfer (3) umgibt, der Luftbalg (4) und der Stoßdämpfer (3) zwischen in das Federbein (1a - 1d) integrierte obere und untere Endabdeckungen (14, 15) geklemmt sind und das am Führerhaus (20) befestigte Element (11) aus einem am Querblech des Führerhauses (20) befestigten massiven Gußteil besteht.

8. Buchse (4) zum Abstützen eines Federbeins (la - 1d) eines Schwerlastfahrzeugs bezüglich dessen Führerhauses (20), ***gekennzeichnet durch*** eine Traghülse (6) mit einer auswärts gerichteten Außenfläche (63), die ein Gummielement (40) umgibt und gleichzeitig mit diesem fest verbunden ist, welches Gummielement (40) eine axiale Länge hat, die wesentlich kürzer als die axiale Länge der Traghülse (6) ist, und ein konzentrisch außen um die Traghülse (6) angeordnetes Befestigungselement (9), das an seinem radial inneren Teil einen ausgebildeten Kragen mit einer radial inneren Fläche (9') aufweist, die im wesentlichen konzentrisch mit der Außenfläche (63) ist und in einer konstanten Distanz C von dieser liegt, und an seinem radial äußeren Teil zumindest eine Verankerungsvorrichtung (16) hat, wobei die Traghülse (6) dafür eingerichtet ist, am Federbein (1a - 1d) befestigt zu werden, und die Verankerungsvorrichtung (16) dafür eingerichtet ist, am Führerhaus (20) befestigt zu werden.

9. Buchse (4) nach Anspruch 8, ***dadurch gekennzeichnet,* daß** die Außenfläche (63) der Traghülse (6) mit einem vertikal aufwärts abnehmenden Durchmesser konisch ist, die Innenfläche (9') mit der Außenfläche (63) der Traghülse (6) im wesentlichen konzentrisch ist und der Kragen und die Innenfläche (9') im Gummielement (40) vollkommen eingeschlossen sind.

10. Buchse (4) nach Anspruch 8 oder 9, ***dadurch gekennzeichnet,* daß** die Traghülse (6) ein axial durchgehendes zentrales Loch aufweist, das dazu gedacht ist, eine stangenförmige Befestigungsvorrichtung (8) aufzunehmen, und der radial äußere Teil des Befestigungselements (9) scheibenförmig ist, wobei dessen Normale im wesentlichen parallel zur axialen Mittellinie des oben erwähnten zentralen Lochs ist.

## Revendications

1. Agencement destiné à suspendre de manière élastique une cabine (20) sur un châssis de véhicule (21) de telle sorte que la cabine (20) est reliée au châssis de véhicule (21) par l'intermédiaire d'une pluralité de colonnes élastiques (1a à 1d) qui sont théoriquement agencées verticalement, de telle sorte que la partie inférieure (10a à 10b) de chaque colonne élastique (1a à 1d) est reliée au châssis de véhicule (21), la partie supérieure (4a à 4d) de chaque colonne élastique (1a à 1d) est reliée à la cabine (20) et chaque colonne élastique (1a à 1d) incorpore un ressort (2) et un élément d'absorption de choc (3) reliés parallèlement au ressort (2), et chaque colonne élastique (1a à 1d) est reliée par l'intermédiaire d'un plot (4) à un élément (11) qui est fixé sur la cabine (20), **caractérisé en ce que** le plot (4) incorpore un élément en caoutchouc (40) agencé de manière externe autour d'un fourreau de support (6) et relié rigidement à celui-ci, qui est lui-même rigidement agencé par rapport à la colonne élastique (1a à 1d), lequel fourreau de support (6) comporte une surface externe (63) orientée radialement vers l'extérieur contre laquelle l'élément en caoutchouc (40) est fixé, un élément de fixation (9) agencé de manière concentrique à l'extérieur du fourreau de support (6), lequel élément de fixation (9) comporte une surface radialement interne (9') sensiblement concentrique à la surface externe (63) appartenant au fourreau de support (6), de telle sorte que la surface interne (9') de l'élément de fixation (9) est rigidement agencée dans le plot en caoutchouc (4) et est située à une distance sensiblement constante C par rapport à la surface externe (63) du fourreau de support (6), lequel élément de fixation (9) comporte des dispositifs d'ancrage (12, 13, 16) situés radialement à l'extérieur de l'élément en caoutchouc (40) afin d'assurer un ancrage sur l'élément (11) fixé sur la cabine (20), **en ce que** le fourreau de support (6) présente une longueur axiale (SL) et l'élément en caoutchouc (40) présente une longueur axiale (B_{L}) le long de la partie principale de son étendue radiale, de sorte que (S_{L}) est supérieur à (B_{L}) et qu'il existe une distance libre (a₁) entre la surface supérieure orientée axialement (41) de l'élément en caoutchouc (40) et une première surface de butée (5) qui, pour des besoins de déplacement, est verrouillée par rapport à la partie supérieure (14) de la colonne élastique (1a à 1d), et qu'il existe une distance libre (a₂) entre la surface inférieure orientée axialement (42) de l'élément en caoutchouc (40) et une seconde surface de butée (14) qui, pour des besoins de déplacement, est verrouillée par rapport à la partie supérieure de la colonne élastique (1a à 1d) lorsque la cabine (20) est assemblée sur le châssis (21) et charge de manière statique le plot (4).

2. Agencement selon la revendication 1, **caractérisé en ce que** la surface externe (63) du fourreau de support (6) est conique avec un diamètre verticalement dégressif vers le haut, **en ce que** l'élément de fixation (9) incorpore un collier à développement conique qui forme la surface radialement interne (9') qui est sensiblement concentrique à la surface externe (63) du fourreau de support, et **en ce que** le collier et la surface interne (9') sont entièrement enfermés dans l'élément en caoutchouc (40).

3. Agencement selon la revendication 1 ou 2, **caractérisé en ce que** le plot (4) est dimensionné de telle sorte que les distances libres (a₁, a₂) sont identiques et sont comprises dans la plage de 2 à 3 mm lorsque la cabine (20) est montée sur le châssis (21) et charge de manière statique le plot (4).

4. Agencement selon l'une quelconque des revendications 1 à 3, **caractérisé en ce que** le déplacement relatif entre la cabine (20) et le châssis de véhicule (21) avec une amplitude excédant S_{L} - B_{L}/2 dans la direction de la colonne élastique (1a à 1d) est absorbé par le plot (4) de telle sorte que les surfaces orientées axialement (41, 42) de l'élément en caoutchouc (40) viennent en butée sur les surfaces de butée (5, 14).

5. Agencement selon l'une quelconque des revendications 1 à 4, **caractérisé en ce que** le plot en caoutchouc (4) est dimensionné de telle sorte que sa constante d'élasticité augmente d'au moins cinq fois lorsque les surfaces orientées axialement (41, 42) du plot en caoutchouc (4) viennent en butée contre les surfaces de butée (5, 14), c'est-à-dire, à l'occasion de déplacements relatifs entre la cabine (20) et la partie supérieure (14) de la colonne élastique (1c à 1d) respectivement supérieurs à a₁ et a₂.

6. Agencement selon l'une quelconque des revendications 1 à 5, **caractérisé en ce que** la constante d'élasticité du plot en caoutchouc (4) est de l'ordre de 600 à 800 N/mm à l'occasion d'un déplacement relatif inférieur à a₁ ou à a₂ respectivement entre la cabine (20) et la partie supérieure (14) de la colonne élastique (1a à 1d), et **en ce que** la constante d'élasticité du plot en caoutchouc (4) est de 3000 N/mm environ à l'occasion d'un déplacement relatif excédent a1 et a2 respectivement entre la cabine (20) et la partie supérieure (14) de la colonne élastique (1a à 1d).

7. Agencement élastique selon l'une quelconque des revendications 1 à 6, **caractérisé en ce que** le ressort (2) est un ressort à soufflet pneumatique qui entoure l'élément d'absorption de choc (3), **en ce que** le soufflet pneumatique (2) et l'élément d'absorption de choc (3) sont bloqués entre des obturateurs d'extrémité supérieur et inférieur (14, 15) intégrés dans la colonne élastique (1a à 1d) et **en ce que** l'élément (11) fixé sur la cabine (20) consiste en un élément massif coulé fixé sur la paroi coupe-feu de la cabine (20).

8. Plot (4) destiné à supporter une colonne élastique (1a à 1d) d'un véhicule utilitaire lourd par rapport à la cabine (20) de ce dernier, **caractérisé par** un fourreau de support (6) avec une surface externe (63) orientée vers l'extérieur, laquelle surface externe (63) est entourée par un élément en caoutchouc (40) et, simultanément, est reliée fermement à celui-ci, lequel élément en caoutchouc (40) présente une longueur axiale qui est sensiblement plus courte que la longueur axiale du fourreau de support (6), et par un élément de fixation (9) agencé de manière concentrique à l'extérieur du fourreau de support (6), lequel élément de fixation (9) présente, à sa partie radialement interne, un collier développé avec une surface radialement interne (9') qui est sensiblement concentrique à la surface externe (63) et à une distance constante C par rapport à celle-ci, et comporte, à sa partie radialement externe, au moins un dispositif d'ancrage (16), de telle sorte que le fourreau de support (6) est agencé de manière à être fixé sur la colonne élastique (1a à 1d) et le dispositif d'ancrage (16) est agencé de manière à être fixé sur la cabine (20).

9. Plot (4) selon la revendication 8, **caractérisé en ce que** la surface externe (63) du fourreau de support (6) est conique avec un diamètre verticalement dégressif vers le haut, **en ce que** la surface interne (9') est sensiblement concentrique à la surface externe (63) du fourreau de support (6), et **en ce que** le collier et la surface interne (9') sont entièrement intégrés dans l'élément en caoutchouc (40).

10. Plot (4) selon la revendication 8 ou 9, **caractérisé en ce que** le fourreau de support (6) comporte, s'étendant axialement à travers, un orifice central destiné à recevoir un dispositif de fixation en forme de tige (8), et **en ce que** la partie radialement externe de l'élément de fixation (9) est en forme de disque dont la direction normale est sensiblement parallèle à la ligne d'axe centrale de l'orifice central mentionné précédemment.
